# EUROPEAN PATENT SPECIFICATION

(11) **EP 2 937 003 B1**
(45) Date of publication and mention of the grant of the patent: **05.10.2016**
(21) Application number: 15163605.7
(22) Date of filing: 14.04.2015
(51) Int. Cl.: A41D 13/008, A41D 27/20, B29C 41/14, B29C 41/22, B29C 41/20

(54) **DELAMINATION CAVITY IN DIPPING MANUFACTURED ARTICLE FOR EMBEDDED DEVICE**
DELAMINATIONSHOHLRAUM IN DURCH EINTAUCHEN HERGESTELLTEN ARTIKEL FÜR EINGEBETTETE VORRICHTUNG
CAVITÉ DE DÉLAMINAGE DANS UN ARTICLE MANUFACTURÉ DE TREMPAGE POUR DISPOSITIF INTÉGRÉ

(30) Priority: 24.04.2014 US 201461983896 P
(43) Date of publication of application: 28.10.2015
(73) Proprietor: Honeywell International Inc., Morris Plains, NJ 07950 (US)
(72) Inventor: Joanny, Romain, Morristown, NJ New Jersey 07962-2245 (US); Gallardo, Francois, Morristown, NJ New Jersey 07962-2245 (US)
(74) Representative: Houghton, Mark Phillip

(56) References cited:
- US-A- 5 317 760
- US-A1- 2003 021 903
- US-A1- 2005 101 060
- US-A1- 2005 253 724
- US-A1- 2013 277 433

## Description

### BACKGROUND

Electrical power is commonly distributed over power lines. Electrical energy is generated at a generating facility. From there electricity may be distributed to remote locations over high-voltage power lines. Sub-stations receive the generated power and step-down the voltage to lower voltages. These sub-stations then distribute the electrical energy again over other power lines. These power lines may distribute the energy to end users or perhaps to other secondary sub-stations. The voltage levels of electrical energy on the high-voltage lines may be 50,000 volts or more. The voltage level on the local power lines may be as low as 110 volts. Both the high-voltage lines and the low-voltage lines present a danger of electrical shock to people who may come in contact with the power lines.

Electrical utility companies must install, maintain, repair, and modify the power distribution network. New power lines must be provided for new buildings as well as for increased demands of existing facilities. After damage to power lines from storms, for example, power lines may require repair. New technology may require modification to existing power distribution networks. Utility companies hire and train workers to safely perform such repairs and modifications. These workers may wear protective clothing when working on existing or when installing new power lines. Insulated gloves and clothing may minimize the risk of electrical shock for such workers. Many different types of insulative materials may be used in the manufacture of such protective clothing. Rubber gloves, for example, may be worn on the hand of electrical line workers. Leather boots may be worn to provide isolation between a worker and the ground, for example.

These utility companies may provide protective equipment to the workers as safety measures for those working on or near power lines. An electrical utility company may have an inventory of protective clothing to supply to their employees who may need such protection. The utility companies may have to keep various sizes in their inventory so as to provide suitable protection to workers who may have a variety of different builds. The utility companies may have a check-out system to account for the whereabouts of the protective clothing that it provides.

### SUMMARY

The present invention provides an article as defined in claim 1. The article may include the features of any one or more of dependent claims 2 to 8.

The present invention also provides a method as defined in claim 9. The method may include the features of any one or more of dependent claims 10 to 15

Apparatus and associated methods relate to creating a localized delamination pocket in a dipped article by affixing a patch to a surface of the unfinished dipped article, the patch having a surface to which the dipping material doesn't adhere, and then re-dipping the article, covering the patch. This surface may be referred to as a non-adhering surface. In an illustrative embodiment, the patch may be removed after the re-dipping, leaving a pocket in the article. This pocket may be referred to as a delamination pocket. A device may be inserted into the pocket and an open end of the pocket may be sealed, securing and/or retaining the device within the pocket. In some embodiments, glue may be used to securely seal the pocket. In an exemplary embodiment, a radio frequency identity (RFID) device or other electronic device may be secured within the pocket, for example. The delamination pocket may securely capture a device which may advantageously be recovered by slicing open the pocket at the end of life of the article, and removing the device.

Various embodiments may achieve one or more advantages. For example, some embodiments may provide a pocket sized to receive a particular device. For example, a patch may have a predetermined size corresponding to a device. In some embodiments, relatively expensive devices may be inserted into consumable articles, as the devices may be recovered after consumption of the article. In an illustrative example, a Global Positioning System (GPS) receiver/transmitter may be inserted into a boot, for example. The GPS receiver/transmitter may be securely captured within a delamination pocket created in the boot at time of manufacturing. After the boot has worn out, the GPS receiver may be removed for reuse. In some embodiments, the pocket may be resealably closed permitting entry into the pocket. In some embodiments, batteries, for example, may be replaced using such a resealable opening to the pocket.

In an illustrative embodiment, passive RFID devices may be inserted into a delamination pocket of a rubber glove, for example. The RFID devices may harvest energy from an AC electric field, in some examples. AC electric field powered devices may report electric field strength, for example, via a wireless transmitter. In some embodiments, the pocketed device may provide a warning to a wearer when the measured field strength exceeds a predetermined threshold, for example. In some embodiments, the cost of the article may be reduced, owing to reuse capability of an embedded device.

The details of various embodiments are set forth in the accompanying drawings and the description below. Other features and advantages will be apparent from the description and drawings, and from the claims.

US2013/0277433 discloses clothing with a (for example) rubber encased RFID tag.

### BRIEF DESCRIPTION OF THE DRAWINGS

FIG. 1 depicts an electrical line worker wearing an exemplary dipped glove with delamination pocket having an RFID device contained therein.
FIG. 2 depicts an exemplary rubber glove with delamination pocket located near the wrist opening.
FIG. 3 depicts cross-section of an exemplary multi-layer article having a delamination pocket.
FIG. 4 depicts an exemplary pocketed glove populated with an exemplary passive RFID within.
FIG. 5 depicts an exemplary boot with an exemplary delamination pocket.
FIG. 6 depicts a series of layers laminated over a patch to form a delamination pocket.
FIG. 7 depicts the boot of FIG. 5 illustrating the delamination pocket sandwiched between layers of laminated materials.
FIG. 8 depicts a flow chart of a method.
FIG. 9 depicts a flow chart of a method.
FIG. 10 depicts a flow chart of a method.
FIG. 11 depicts a flow chart of a method
FIG. 12 depicts a flow chart of a method.
FIG. 13 depicts a flow chart of a method.
FIG. 14 depicts a flow chart of a method.

Like reference symbols in the various drawings indicate like elements.

### DETAILED DESCRIPTION OF ILLUSTRATIVE EMBODIMENTS

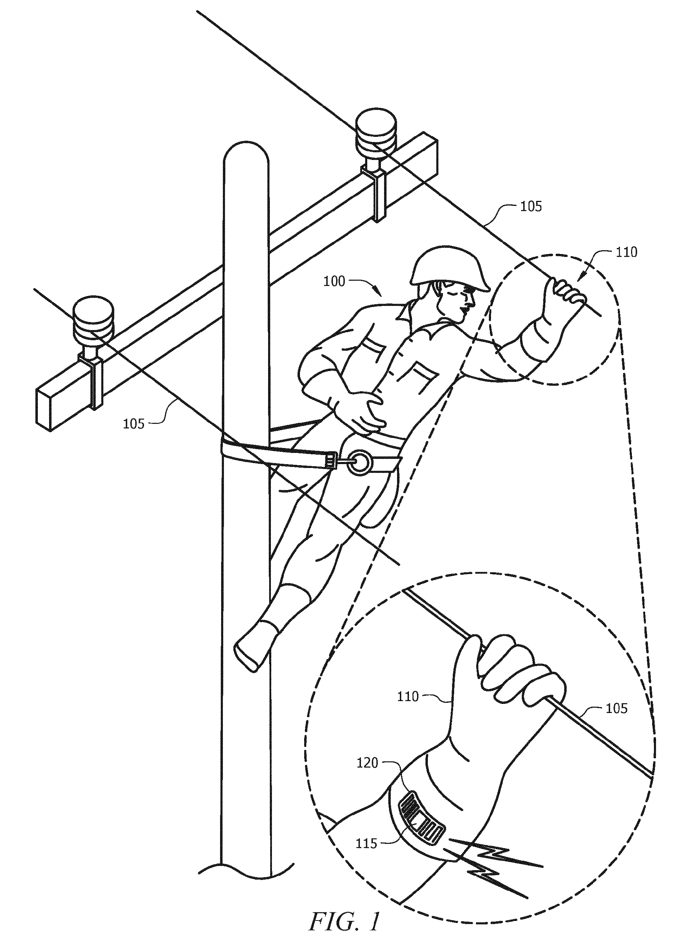

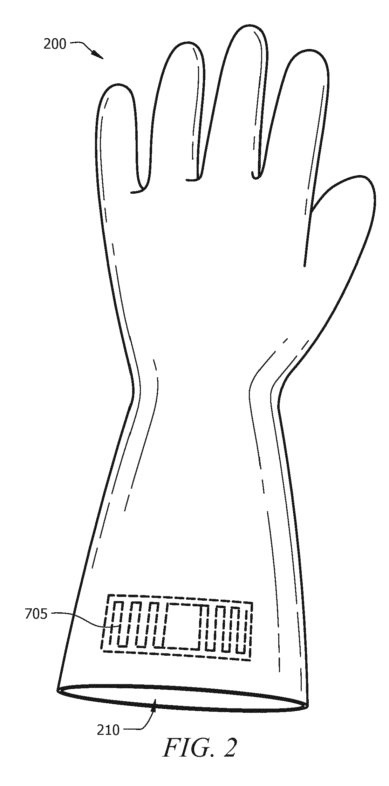

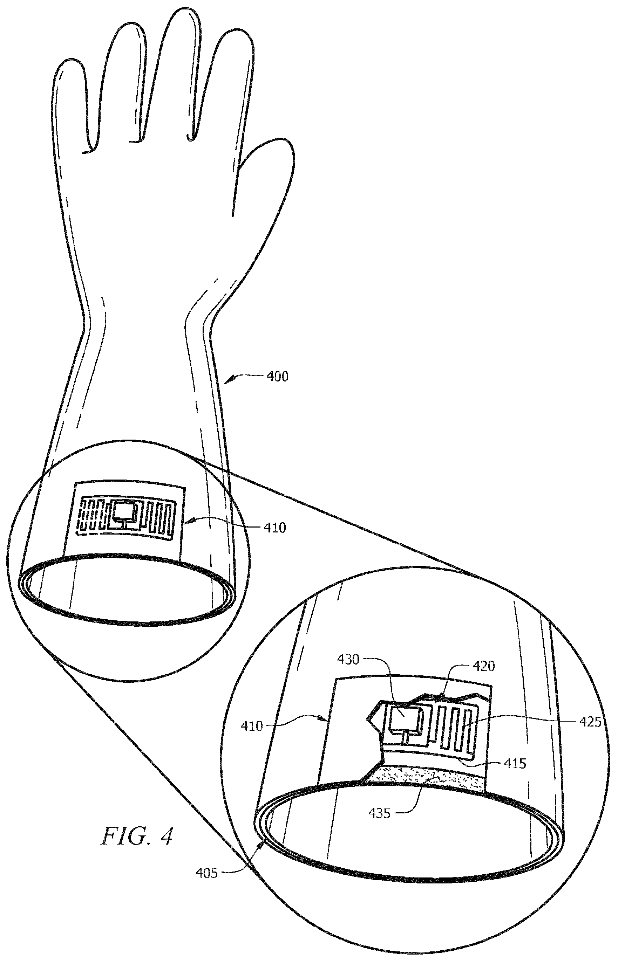

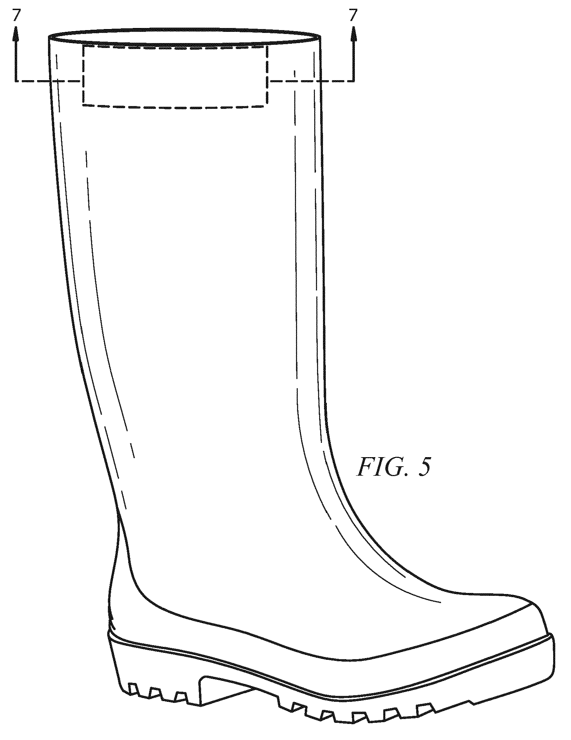

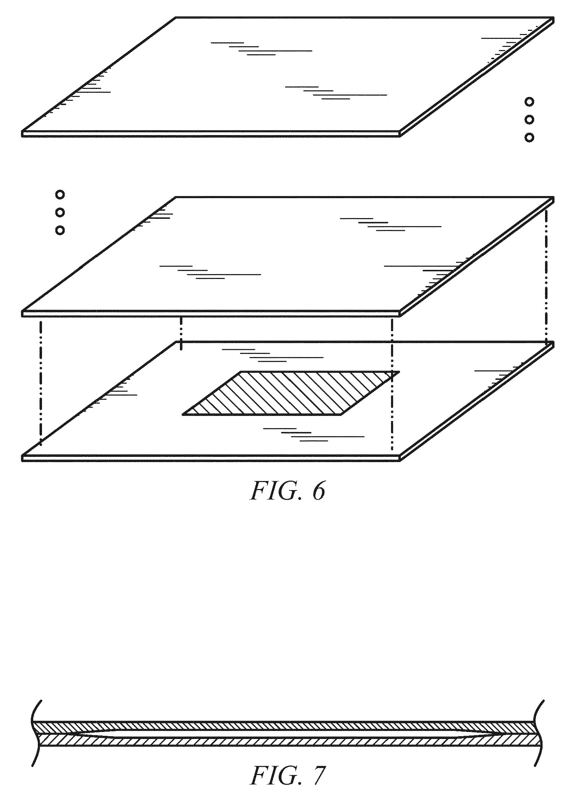

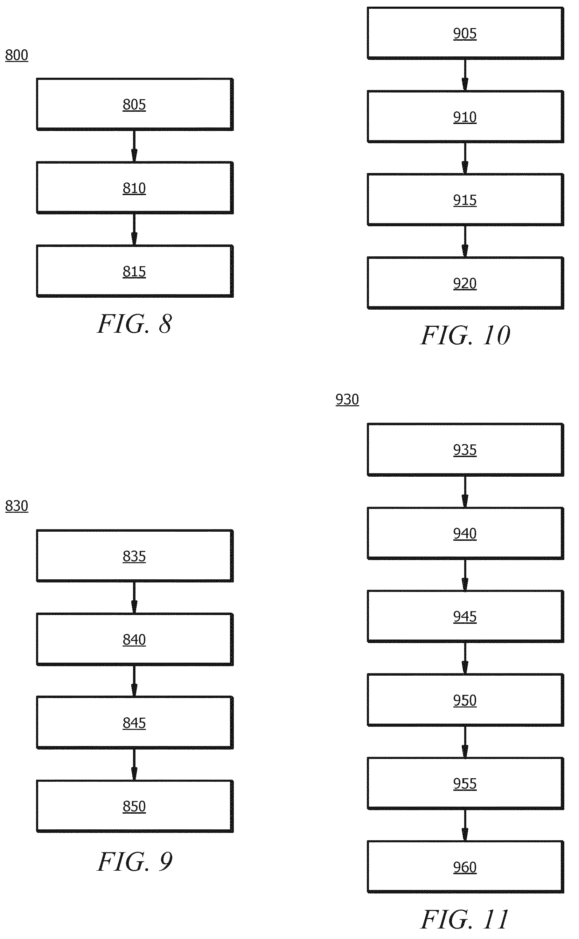

To aid understanding, this document is organized as follows. First, an exemplary scenario in which an exemplary dipped glove having a delamination pocket device is described with reference to FIG. 1. Second, with reference to FIGS. 2-3, the discussion turns to exemplary manufacturing methods of delamination pockets in dipped gloves. Then, with reference to FIG. 4, methods for securely closing a delamination pocket will be described using an RFID device as an exemplary pocket payload. Finally, alternate articles will be describe, with reference to FIG. 5, which depicts an exemplary rubber boot having a delamination pocket. FIG. 6 shows some views of laminated layers sandwiching a patch to form a delamination pocket. FIG. 7 shows details of the rubber boot introduced in FIG. 5. FIG. 8 through FIG. 14 are flow charts representing methods related to using or forming articles of protective clothing having delamination pockets.

FIG. 1 depicts an electrical line worker wearing an exemplary dipped glove with delamination pocket having an RFID device contained therein. In the FIG. 1 depiction, an electrical line worker 100 is working on a series of power lines 105. The worker is handling one of the power lines 105. The worker is wearing insulated gloves 110 so as to reduce the risk of incurring an electrical shock. The insulated gloves 110 may be referred to as articles of protective clothing. The insulated gloves may have been manufactured by sequentially layering insulated material upon a form, for example. The insulated gloves 110 have an RFID device 115 within a delamination pocket 120. The delamination pocket may have been created between two of the sequential layers of the insulated glove 110, and the delamination pocket may be said to be disposed between the sequential layers of the insulated glove 110. The RFID device may wirelessly communicate to a wireless base station (not depicted), for example. The RFID device may be used for inventory purposes, for example. In some embodiments, the RFID device may include additional features, for example. In some embodiments, the RFID device may contain a field detection module, for example an AC electrical field detection module. Such a device may report the detected field wirelessly to a base station.

RFID devices may include wireless non-contact devices that transmit an identifying signal to a receiver. Maintenance status can be monitored using RFID devices. For example, a user may query a device having an RFID device. The received identifying signal may be used to look up the maintenance status of the queried device, for example. Alternatively, the maintenance status of the device may be stored by the RFID device and when querried the RFID device may look up the stored maintenance status and transmit that back to the querrying device, for example an RFID scanner or reader. Manufacturing lines may use RFID devices to track parts being assembled into production units. For example, an assembly machine may query the product as to what revision of boards it may contain. In response to the board identification, the assembly machine may select a part that corresponds to the revision of the device being manufactured. RFID devices have been inserted into access control cards. Such cards permit or deny access to individuals according to predetermined rules of permission. For example, such cards may permit or deny access to inviduals to restricted access areas such as buildings or offices.

In some contexts, such cards may be referred to as an access code device, for example an electronic device that, when challenged by a location access authentication monitor, presents an electronic code or identity that may establish an authorization to enter a limited access area or a restricted access area. For example, a door scanner located at the entrance to an office building may challenge an access code device, the access code device may wirelessly transmit an access code stored in the access code device, the door scanner may receive the wirelessly transmitted access code, and the transmitted code may be compared to a list of authorized codes, for example compared by an application executing on a computer coupled to the door scanner. If the transmitted code matches a code on the list of authorized code, access is granted, for example an electronic lock is at least temporarily released or a door is actuated to swing or to slide open temporarily before reclosing. In embodiment, the access code device may automatically - without receiving a challenge message from a door scanner - transmit the access code when the access code device is energized by power radiated by an incident AC electrical field or radio frequency field and harvested by the access code device.

In some embodiments, a test and/or calibration device may be carried within a delamination pocket. For example, insulated gloves may be tested so as to ascertain the gloves' ability to inhibit electrical conduction. A test device may be embedded within a delamination pocket. The test device may be used to sense the conduction of the glove during testing, for example.

FIG. 2 depicts an exemplary rubber glove with a delamination pocket located near the wrist opening. In the FIG. 2 embodiment, a rubber glove 200 includes a delamination pocket 205 located near the wrist opening 210. The rubber glove may be referred to as an article of protective clothing. The rubber glove 200 may have been manufactured by dipping a glove form in a liquid rubber bath. The form may then have been removed along with a layer of rubber attached to the form. The form may then remain above the bath until the attached rubber has been dried and/or cured. A patch may then have been affixed to the dried and/or cured rubber, for example. The patch may adhesively attach to the rubber, in some embodiments. In an exemplary embodiment, the patch may be electrostatically attached to the rubber. The patch may have a coated paper exposed to the next layer, for example. In some embodiments, a Teflon coating may be presented to the bath. The exposed outer surface of the patch, the surface of the patch facing away from the inner rubber layer and hence is exposed to the next layer and presented to the bath, may be a fluoropolymer coating such as Teflon (i.e., polytetrafluoroethylene (PTFE)), fluorinated ethylene propylene (FEP), and perfluoroalkoxy (PFA). FEP is a copolymer of hexafluoropropylene and tetrafluroethylene. The exposed outer surface of the patch may be of a material to which the material of the liquid bath does not adhere, for example. In an exemplary embodiment, the exterior surface may releasably adhere to the bath material. In some embodiments, the patch may be reusable. In an exemplary embodiment the patch may be disposable after a single use.

The glove form may then be re-dipped into the rubber bath. The rubber may then cover the patch forming an exterior surface over the patch. In some embodiments the one or more dipping of the glove form may be performed after the patch has been positioned on the glove. In an exemplary embodiment, two, three, five, eight, or any reasonable number of dippings may be performed, either before the patch is affixed, after the patch is affixed, or both before and after patch affixing. In an embodiment, the glove may be formed of four layers of rubber, five layers of rubber, six layers of rubber, seven layers of rubber, eight layers of rubber, or more layers of rubber. In an embodiment, the glove may be formed of forty layers of rubber, forty one layers of rubber, forty two layers of rubber, forty three layers of rubber, forty four layers of rubber, or a greater number of layers of rubber.

After the final dipping layer has been performed, the patch may be removed from the pocket. In some embodiments, a cut may be necessary to expose and remove the patch from the pocket. In an exemplary embodiment, the dipping is performed such that a region of the patch remains uncovered so that no post dipping cuts may be required, for example. The patch may then be removed from the pocket. In some embodiments, the patch may not be removed from the pocket. For example, the patch may serve as a cushioning device upon which a device may be placed. The device may be inserted into the pocket on one side of the patch, for example. In some examples. The patch, itself may have an interior pocket into which a device may be inserted. In such an embodiment, the patch may provide cushioning that may surround an inserted device. In some embodiments, the patch may permanently affix to the interior layer when attached. A patch may have an exterior adhesive layer which may be uncovered after the exterior layer of the glove has been applied and after the device has been inserted into the pocket. In an exemplary embodiment, a removable strip may expose the adhesive layer just before the pocket is adhesively closed, for example.

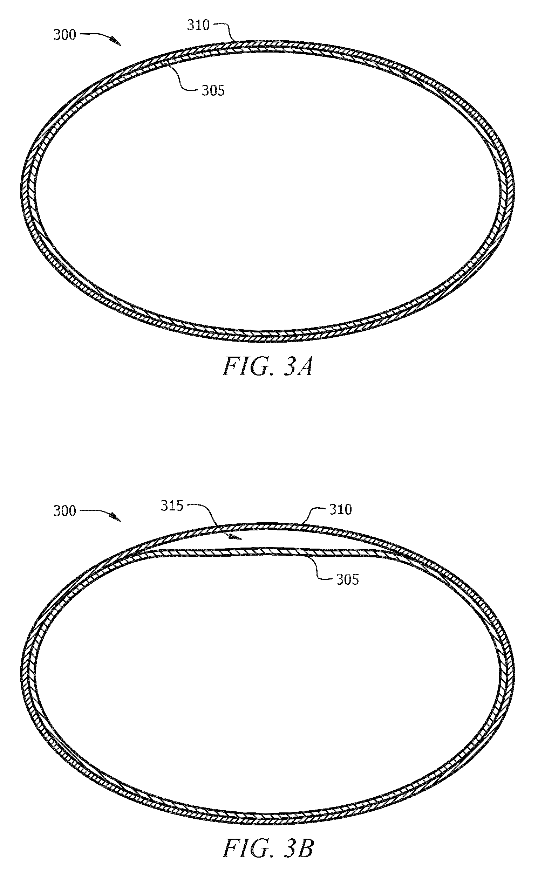

FIGS. 3A and 3B depict a cross-section of an exemplary multi-layer article having a delamination pocket. In the depicted embodiment, an exemplary layered glove 300 is depicted from the vantage point of the wrist aperture. The layered glove 300 includes an interior layer 305 and an exterior layer 310. A delamination pocket 315 may open in the same direction as the wrist aperture for example. The delamination pocket may be sized to receive a device therein. For example, a patch may be sized to correspond to a specific payload. The layered glove 300 may be referred to as an article of protective clothing.

FIG. 4 depicts an exemplary pocketed glove populated with an exemplary passive RFID within. In FIG. 4 an exemplary pocketed glove 400 includes a wrist aperture 405 to receive a hand of a wearer. The pocketed glove 400 has a delamination pocket 410 formed near the wrist aperture 405. The delamination pocket has been populated with an exemplary RFID device 420. The exemplary RFID device may have a flex circuit with an antenna 425 defined thereon. An RFID chip 430 may be attached to the flex circuit via a solder, for example. The RFID may be captured within the pocket 410 without having been affixed to the glove 400, for example. The pocket may have been sealed along a sealing region 435 in one way or another. For example, an adhesive may have sealed the pocket so as to secure the RFID device 420 therein. In some embodiments a glue may be used to seal the pocket 410. For example, a rubber cement may be used to securely seal a delamination pocket. In some embodiments, a polyurethane glue may seal the delamination pocket. In some embodiments, delamination pockets may be securely closed using one or more mechanical devices. For example, a rivet may be used to secure a device within a pocket. A zipper may be attached to a pocket edge to provide secure closure as well as access to the pocket region. In some embodiments, snaps may releasably close the pocket. The glove 400 may be referred to as an article of protective clothing.

FIG. 5 depicts an exemplary boot having an exemplary delamination pocket. In the FIG. 5 depiction a boot 500 has a delamination pocket 515 created within. The boot 500 may be referred to as an article of protective clothing. The delamination pocket 515 may include a payload such as an electronic device. The delamination pocket 515 may be created in a wall of a rubber boot or another dipped portion of the product, for example. In some embodiments the delamination pocket may be formed in a sidewall of a rubber boot, for example.

Turning now to FIG. 6, an illustration a structure 600 of laminated inner layers and outer layers is described. The inner layers may be formed of rubber by dipping. A first inner layer 610, a second inner layer 615, and a third inner layer 620 are shown in FIG. 6, but any number of inner layers may be employed to make an article of protective clothing as described herein. A patch 605 is shown adhered to the third inner layer 620. The surface of the patch 605 facing and in contect with the third inner layer 620 may have an adhering substance that affixes the patch 605 to the third inner layer 620. Alternatively, the patch 605 may be adhered to the third inner layer 620 by electrostatic action or by vacuum action. The surface of the patch 605 facing outwards and away from the third inner layer 620 and towards a first outer layer 625 has a non-adhering surface, for example a surface having a fluoropolymer coating or surface as described above. The first outer layer 625 may be formed over the patch 605 and the third inner layer 620. Where the first outer layer 625 directly contacts the third inner layer 620, the layers 625, 620 may laminate to each other. Where the patch 605 is disposed between the layers, the layers 625, 620 do not laminate and a delamination pocket is formed. Any number of additional outer layers 630 may be laminated over the first outer layer 625, for example by dipping into a bath of liquid rubber. It is understood that the layers 610, 615, 620, 625, 630 are only portions of extended layers, for example extended layers that define a glove layer, a boot layer, or other layer of an article of protective clothing. After fabrication of the layers of the article of protective clothing, some of the layers of the laminated material may be cut, the patch 605 removed, and an electronic device inserted into the location between the third inner layer 620 and the first outer layer 625, in a localized delamination pocket proximate to where the patch 605 had been located.

Turning now to FIG. 7, further details of the boot 500 are described. The boot 500 may be formed of an inner layer 720 and an outer layer 725 that are laminated to each other except at the location of the delamination pocket 515.

In one or more embodiments of the protective clothing described above, the electronic device may be incorporated into the clothing during the process of manufacturing the clothing. For example, the electronic device may be adhered to an inner rubber layer and one or more outer rubber layers may be laminated over the electronic device and the inner rubber layer. In this embodiment, there may be no delamination pocket and no non-adhering surface introduced between the inner rubber layer and the outer rubber layer. In this embodiment, the electronic device may be adhered to or coupled to a patch, and the patch

(with the electronic device) adhered to the inner rubber layer. The electronic device can be adhered to a patch of polymeric material or a patch of plastic, this patch may be adhered to the inner rubber layer, and one or more outer rubber layers may be laminated over the patch, electronic device, and inner rubber layer, for example through multiple dipping and curing cycles.

In an embodiment, the electronic device may be enveloped by a protective sheath or cushioning package. The protective sheath or cushioning package may protect the electronic device from excessive heat. The protective sheath or cushioning package may protect the electronic device from exposure to solvents. The protective sheath or cushioning package may protect the electronic device from mechanical shocks or vibration. In an embodiment, the protective sheath or cushioning package with the enveloped electronic device may be adhered to the inner rubber layer and one or more outer rubber layers may be laminated over the inner rubber layer, the electronic device, and the enveloping protective sheath or cushioning package.

An article of electrically insulated clothing (110, 200, 300, 400, 500) is tougher herein that comprises an inner rubber layer (305), an outer rubber layer (310) laminated over the inner rubber layer (305), and an electronic device disposed between the inner rubber layer and the outer rubber layer, where the electronic device is one of a radio frequency identity (RFID) device, a global positioning system (GPS) device, a test device, a calibration device, or an access code device. The electrically insulated clothing may be an electrically insulated glove (110, 200, 300, 400) or an electrically insulated boot (500) as described further above.

Turning now to FIG. 8, a method 800 is described. The method 800 entails using an article of protective clothing having a delamination pocket disposed between an inner layer and an outer layer of the clothing, such as any of the protective gloves, protective boots, or protective clothes described above. The protective clothing retains an electronic device in the delamination pocket of the protective clothing. The electronic device may be any of an RFID device, a GPS device, a test device, a calibration device, an access control device, or another electronic device. At block 805, energy is harvested by the electronic device from an AC electric field that is incident upon the electronic device. At block 810, the electronic device retrieves stored information (e.g., information stored by the electronic device). At block 815, the electronic device transmits the stored information (e.g., the information that was retrieved in block 810). The stored information may be identification information such as a product identification, a version identification, or both a product identification and a version identification. The stored information may be an access code.

Tuning now to FIG. 9, a method 830 is described. The method 830 entails using an article of protective clothing having a delamination pocket disposed between an inner layer and an outer layer of the clothing, such as any of the protective gloves, protective boots, or protective clothes described above. The protective clothing retains an electronic device in the delamination pocket of the protective clothing. The electronic device is an access control device. At block 835, energy is harvested by the electronic device from an AC electric field that is incident upon the electronic device. At block 840, the electronic device receives a challenge transmission. At block 845, responsive to receiving the challenge transmission, the electronic device retrieves stored information (e.g., an access code). At block 850, the electronic device transmits the stored information. As a result of transmitting the stored information, for example an access code, a user wearing the protective clothing may be granted access to an area, for example a door may open temporarily to admit the user wearing the protective clothing. The challenge transmission received by the electronic device at block 840 may be transmitted by a scanner device coupled to a door controller.

Turning now to FIG. 10, a method 900 is described. The method 900 entails measuring a property of an article of protective clothing. The protective clothing has a delamination pocket disposed between an inner layer and an outer layer of the clothing, such as any of the protective gloves, protective boots, or protective clothes described above. The protective clothing retains an electronic device in the delamination pocket of the protective clothing. The electronic device may be any of a test device or a calibration device. At block 905, energy is harvested by the electronic device from an AC electric field that is incident upon the electronic device. At block 910, the electronic device responds to a field incident on the electronic device. For example, the electronic device detects a test field incident on the electronic device or detects a conductivity of the protective clothing. At block 915, the electronic device measures a characteristic of the protective clothing, for example the field strength within the protective clothing, the conductivity of the protective clothing, or another characteristic. It is understood that the characteristic measured is exhibited or stimulated by the field incident upon the protective clothing and/or the electronic device. At block 920, the electronic device transmits information, for example the measurement of the characteristic determined at block 915. It is understood that the measurement of the characteristic may be stored by the electronic device, retrieved, and then transmitted. Alternatively, the measurement of the characteristic may be transmitted at block 920 without storing by the electronic device.

Turning now to FIG. 11, a method 930 is described. The method 930 entails measuring a property of an article of protective clothing. The protective clothing has a delamination pocket disposed between an inner layer and an outer layer of the clothing, such as any of the protective gloves, protective boots, or protective clothes described above. The protective clothing retains an electronic device in the delamination pocket of the protective clothing. The electronic device may be any of a test device or a calibration device. At block 935, energy is harvested by the electronic device from an AC electric field that is incident upon the electronic device. At block 940, the electronic device responds to a field incident on the electronic device. For example, the electronic device detects a test field incident on the electronic device or detects a conductivity of the protective clothing. At block 945, the electronic device measures a characteristic of the protective clothing, for example the field strength within the protective clothing, the conductivity of the protective clothing, or another characteristic. It is understood that the characteristic measured is exhibited or stimulated by the field incident upon the protective clothing and/or the electronic device. At block 950, the electronic device stores the measurement in the electronic device. For example, the electronic device stores a measurement of a strength of the incident test field or a conductivity of the protective clothing. At block 955, the electronic device retrieves the information stored during the processing of block 950 (e.g., the information about the measured characteristic of the protective clothing). At block 960, the electronic device transmits the stored information, for example the measurement of the characteristic determined at block 945.

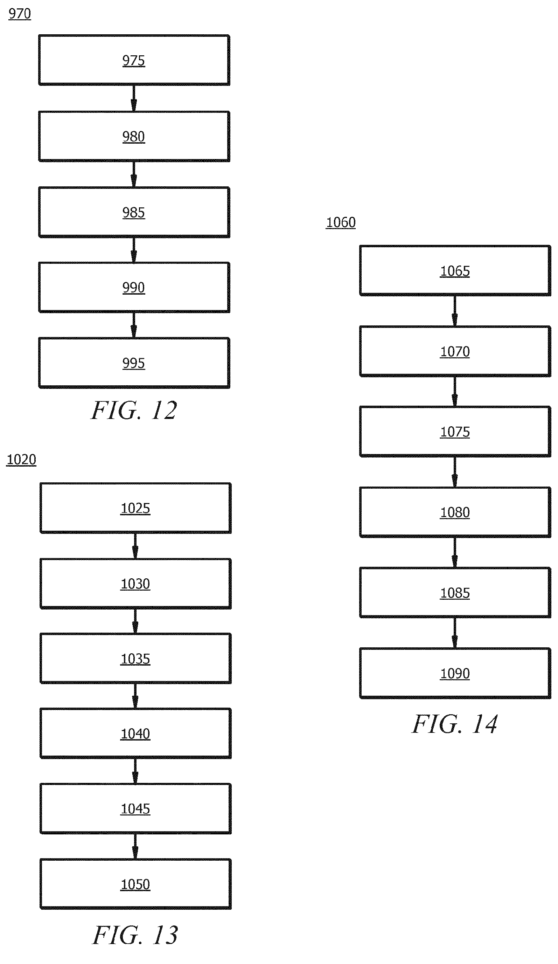

Tuning now to FIG. 12, a method 970 is described. The method 970 is used to manufacture an item of protective clothing such as the protective gloves, the protective boots, or the protective clothing described above. At block 975, a form is dipped into a bath of liquid rubber to create an inner rubber layer of the article of protective clothing over the form. At block 980, the form is removed from the bath of liquid rubber. At block 985, the inner rubber layer is cured. At block 990, after curing the inner rubber layer, adhering a patch is adhered to the inner rubber layer, wherein a face of the patch away from the inner rubber layer is non-adhering. At block 995, after adhering the patch to the inner rubber layer, the inner rubber layer is dipped into the bath to create an outer rubber layer of the article of protective clothing over the inner rubber layer, wherein the outer rubber layer is laminated to the inner rubber layer except where the outer rubber layer contacts the non-adhering face of the patch, thereby forming a delamination pocket inside the article of protective clothing. It is understood that the inner rubber layer made in block 975 may be lamintated over one or more layers created previously.

Turning now to FIG. 13, a method 1020 is described. The method 1020 is used to manufacture an item of protective clothing such as the protective gloves, the protective boots, or the protective clothing described above. At block 1025, a form is dipped into a bath of liquid rubber to create an inner rubber layer of the article of protective clothing over the form. At block 1030, the form is removed from the bath of liquid rubber. At block 1035, the inner rubber layer is cured. At block 1040, after curing the inner rubber layer, adhering a patch is adhered to the inner rubber layer, wherein a face of the patch away from the inner rubber layer is non-adhering. At block 1045, after adhering the patch to the inner rubber layer, the inner rubber layer is dipped into the bath to create an outer rubber layer of the article of protective clothing over the inner rubber layer, wherein the outer rubber layer is laminated to the inner rubber layer except where the outer rubber layer contacts the non-adhering face of the patch, thereby forming a delamination pocket inside the article of protective clothing. At block 1050, a plurality of additional rubber layers are created over the outer rubber layer, for example using a series of dipping followed by curing cycles such as described in block 1025, 1030, and 1035 above. It is understood that the inner rubber layer made in block 1025 may be lamintated over one or more layers created previously.

Turning now to FIG. 14, a method 1060 is described. The method 1060 is used to manufacture an item of protective clothing such as the protective gloves, the protective boots, or the protective clothing described above. At block 1065, a form is dipped into a bath of liquid rubber to create an inner rubber layer of the article of protective clothing over the form. At block 1070, the form is removed from the bath of liquid rubber. At block 1075, the inner rubber layer is cured. At block 1080, after curing the inner rubber layer, adhering a patch is adhered to the inner rubber layer, wherein a face of the patch away from the inner rubber layer is non-adhering. At block 1085, after adhering the patch to the inner rubber layer, the inner rubber layer is dipped into the bath to create an outer rubber layer of the article of protective clothing over the inner rubber layer, wherein the outer rubber layer is laminated to the inner rubber layer except where the outer rubber layer contacts the non-adhering face of the patch, thereby forming a delamination pocket inside the article of protective clothing. At block 1090, an electronic device is installed into the delamination pocket. For example, some of the rubber layers of the protective clothing may be cut through to open access to the delamination pocket, the electronic device may be installed, and the opening may be closed or sealed. It is understood that the inner rubber layer made in block 1065 may be lamintated over one or more layers created previously.

Although various embodiments have been described with reference to the Figures, other embodiments are possible. For example, various articles of clothing may include delamination pockets. For example, hip waders may be manufactured with one or more delamination pocket. Various types of gloves may include delamination pockets. Various types of materials may be used in various dipping processes. Butyl rubber may be used in some dipping baths. Nitrile rubber may be used to create some chemical resistance gloves, for example. Natural rubbers may be used to create various articles. Some articles may have layers manufactured using two or more different types of layer materials. In some embodiments, the article may be selectively coated to promote adhesion of subsequent layers. Layers may be created by dipping in a water based latex rubber bath. Layers may be created by dipping in a rubber bath containing one or more solvents other than water. Such a coating may be masked from a region where a delamination pocket is desired, for example. Such "negative" definition of pockets may be used when subsequent layers may adhere with assistance of such an adhesion layer, for example.

In an embodiment, a method of making an article of protective clothing (110, 200, 300, 400, 500) comprises dipping a form into a bath of liquid rubber to create an inner rubber layer (305) of the article of protective clothing (110, 200, 300, 400, 500) over the form, removing the form from the bath of liquid rubber, and curing the inner rubber layer (305). The method further comprises, after curing the inner rubber layer (305), adhering a patch to the inner rubber layer (305), wherein a face of the patch away from the inner rubber layer (305) is non-adhering and, after adhering the patch to the inner rubber layer (305), dipping the inner rubber layer (305) into the bath to create an outer rubber layer (310) of the article of protective clothing (110, 200, 300, 400, 500) over the inner rubber layer (305), wherein the outer rubber layer (310) is laminated to the inner rubber layer (305) except where the outer rubber layer (310) contacts the non-adhering face of the patch, thereby forming a delamination pocket (120, 205, 315, 410, 515) inside the article of protective clothing (110, 200, 300, 400, 500). In an embodiment, the inner rubber layer (305) is laminated over at least one previously created rubber layer. A plurality of rubber layers can be created over the previously created outer rubber layer (310). An electronic device (115, 420) can be installed into the delamination pocket (120, 205, 315, 410, 515).

A number of implementations have been described. Nevertheless, it will be understood that various modifications may be made. For example, advantageous results may be achieved if the steps of the disclosed techniques were performed in a different sequence, or if components of the disclosed systems were combined in a different manner, or if the components were supplemented with other components. Accordingly, other implementations are contemplated.

The scope of the invention is defined by the appended claims.

## Claims

1. An article of protective clothing (110, 200, 300, 400, 500), comprising:
an inner rubber layer (305); and
an outer rubber layer (310) laminated over the inner rubber layer (305) via a rubber bath dipping process excepting at a local delamination area between the inner rubber layer and the outer rubber layer that defines a delamination pocket (120, 205, 315, 410, 515).

2. The article of protective clothing (110, 200, 300, 400, 500) of claim 1, further comprising a patch disposed between the inner rubber layer (305) and the outer rubber layer (310), wherein a first surface of the patch is adhered to the inner rubber layer (305) and a second, outer surface of the patch facing the outer rubber layer (310) is not adhered to the outer rubber layer (310) and defines the delamination pocket (120, 205, 315, 410, 515), and wherein the second, outer surface of the patch comprises a material to which rubber bath dipping material does not adhere.

3. The article of protective clothing (110, 200, 300, 400, 500), of claim 1 or 2, further comprising an electronic device (115, 420) retained in the delamination pocket, wherein the electronic device is one of a radio frequency identity (RFID) device, a global positioning system (GPS) device, a test device, a calibration device, or an access code device.

4. The article of protective clothing (110, 200, 300, 400, 500), of claim 3, wherein the electronic device (115, 420) is sealed within the delamination pocket.

5. The article of protective clothing (110, 200, 300, 400), of any of claims 1 to 4, wherein the protective clothing (110, 200, 300, 400) is an electrically insulative glove.

6. The article of protective clothing (110, 200, 300, 400, 500) of claim 1 to 4, wherein the article of electrically insulated clothing is an electrically insulated boot (500).

7. The article of protective clothing of claim 2, wherein the patch comprises an interior pocket.

8. The article of protective clothing of claim 2, wherein the second, outer surface of the patch comprises one of the following: a fluoropolymer coating, fluorinated ethylene propylene, and perfluoroalkoxy.

9. A method of manufacturing an item of protective clothing, comprising the steps of:
dipping a form into a bath of liquid rubber to create an inner rubber layer (305) of the protective clothing over the form;
removing the form from the bath of liquid rubber;
curing the inner rubber layer (305); and
adhering a patch (605) to the inner rubber layer (305), wherein a face of the patch away from the inner rubber layer (305) comprises a material to which rubber bath dipping material does not adhere.

10. The method of claim 9, further comprising: dipping the inner rubber layer (305) into the bath to create an outer rubber layer (310) of the protective clothing over the inner rubber layer (305), wherein the outer rubber layer (310) is laminated to the inner rubber layer (305) except where the outer rubber layer (310) contacts the non-adhering face of the patch, thereby forming a delamination pocket (315) inside the article of protective clothing.

11. The method of claim 10, further comprising installing an electronic device (420) in the delamination pocket (315).

12. The method of claim 10, further comprising cutting either the inner or outer rubber layer to open access to the delamination pocket (315).

13. The method of claim 9, wherein the inner rubber layer (305) is laminated over one or more previously created rubber layers.

14. The method of claim 10, wherein additional rubber layers are created over the outer rubber (310) layer using a series of dipping and curing cycles.

15. The method of claim 9, wherein the protective clothing is either a protective glove or protective boots.

## Patentansprüche

1. Schutzkleidungsartikel (110, 200, 300, 400, 500), der Folgendes umfasst:
eine innere Gummischicht (305); und
eine äußere Gummischicht (310), die mittels eines Gummibadtauchprozesses über die innere Gummischicht (305) laminiert ist, mit Ausnahme eines lokalen Delaminierungsbereichs zwischen der inneren Gummischicht und der äußeren Gummischicht, der eine Delaminierungstasche (120, 205, 315, 410, 515) definiert.

2. Schutzkleidungsartikel (110, 200, 300, 400, 500) nach Anspruch 1, der des Weiteren ein Teilstück umfasst, das zwischen der inneren Gummischicht (305) und der äußeren Gummischicht (310) angeordnet ist, wobei eine erste Fläche des Teilstücks an der inneren Gummischicht (305) angehaftet ist und eine zweite, äußere Fläche des Teilstücks, die der äußeren Gummischicht (310) zugewandt ist, nicht an der äußeren Gummischicht (310) angehaftet ist und die Delaminierungstasche (120, 205, 315, 410, 515) definiert, und wobei die zweite, äußere Fläche des Teilstücks ein Material umfasst, an dem kein Gummibadtauchmaterial anhaftet.

3. Schutzkleidungsartikel (110, 200, 300, 400, 500) nach Anspruch 1 oder 2, der des Weiteren eine elektronische Vorrichtung (115, 420) umfasst, die in der Delaminierungstasche aufgenommen ist, wobei die elektronische Vorrichtung eines von Folgendem ist: ein Hochfrequenzidentitäts(RFID)-Transponder, eine Global Positioning System(GPS)-Vorrichtung, eine Testvorrichtung, eine Kalibrierungsvorrichtung, oder eine Zugangscode-Vorrichtung.

4. Schutzkleidungsartikel (110, 200, 300, 400, 500) nach Anspruch 3, wobei die elektronische Vorrichtung (115, 420) innerhalb der Delaminierungstasche versiegelt ist.

5. Schutzkleidungsartikel (110, 200, 300, 400) nach einem der Ansprüche 1 bis 4, wobei die Schutzkleidung (110, 200, 300, 400) ein elektrisch isolierter Handschuh ist.

6. Schutzkleidungsartikel (110, 200, 300, 400, 500) nach Anspruch 1 bis 4, wobei der elektrisch isolierte Kleidungsartikel ein elektrisch isolierter Stiefel (500) ist.

7. Schutzkleidungsartikel nach Anspruch 2, wobei das Teilstück eine Innentasche umfasst.

8. Schutzkleidungsartikel nach Anspruch 2, wobei die zweite, äußere Fläche des Teilstücks eines von Folgendem umfasst: eine Fluorpolymerbeschichtung, fluoriertes Ethylenpropylen, und Perfluoralkoxy.

9. Verfahren zur Herstellung eines Schutzkleidungsstücks, das folgende Schritte umfasst:
Tauchen einer Form in ein Bad aus flüssigem Gummi zum Bilden einer inneren Gummischicht (305) der Schutzkleidung über der Form;
Herausnehmen der Form aus dem Bad aus flüssigem Gummi;
Aushärten der inneren Gummischicht (305); und
Anhaften eines Teilstücks (605) an der inneren Gummischicht (305), wobei eine Fläche des Teilstücks, die von der inneren Gummischicht (305) fort weist, ein Material umfasst, an dem kein Gummibadtauchmaterial anhaftet.

10. Verfahren nach Anspruch 9, das des Weiteren Folgendes umfasst: Tauchen der inneren Gummischicht (305) in das Bad zum Bilden einer äußeren Gummischicht (310) der Schutzkleidung über der inneren Gummischicht (305), wobei die äußere Gummischicht (310) an die innere Gummischicht (305) laminiert wird, außer an der Stelle, wo die äußere Gummischicht (310) die nicht-anhaftende Fläche des Teilstücks berührt, wodurch eine Delaminierungstasche (315) im Inneren des Schutzkleidungsartikels entsteht.

11. Verfahren nach Anspruch 10, das des Weiteren umfasst, eine elektronische Vorrichtung (420) in der Delaminierungstasche (315) zu montieren.

12. Verfahren nach Anspruch 10, das des Weiteren umfasst, entweder die innere oder die äußere Gummischicht einzuschneiden, um den Zugang zu der Delaminierungstasche (315) zu öffnen.

13. Verfahren nach Anspruch 9, wobei die innere Gummischicht (305) über eine oder mehrere zuvor gebildete Gummischichten laminiert wird.

14. Verfahren nach Anspruch 10, wobei mittels einer Reihe von Tauch- und Aushärtungszyklen zusätzliche Gummischichten über der äußeren Gummischicht (310) gebildet werden.

15. Verfahren nach Anspruch 9, wobei die Schutzkleidung entweder ein Schutzhandschuh ist oder Schutzstiefel sind.

## Revendications

1. Article de vêtement de protection (110, 200, 300, 400, 500), comprenant:
une couche de caoutchouc intérieure (305); et
une couche de caoutchouc extérieure (310) stratifiée sur la couche de caoutchouc intérieure (305) par l'intermédiaire d'un procédé d'immersion dans un bain de caoutchouc excepté pour une zone de délaminage locale entre la couche de caoutchouc intérieure et la couche de caoutchouc extérieure qui définit une poche de délaminage (120, 205, 315, 410, 515).

2. Article de vêtement de protection (110, 200, 300, 400, 500) selon la revendication 1, comprenant en outre une pastille disposée entre la couche de caoutchouc intérieure (305) et la couche de caoutchouc extérieure (310), dans lequel une première surface de la pastille est collée à la couche de caoutchouc intérieure (305) et une deuxième surface extérieure de la pastille faisant face à la couche de caoutchouc extérieure (310) n'est pas collée à la couche de caoutchouc extérieure (310) et définit la poche de délaminage (120, 205, 315, 410, 515), et dans lequel la deuxième surface extérieure de la pastille comprend un matériau auquel le matériau d'immersion dans un bain de caoutchouc n'adhère pas.

3. Article de vêtement de protection (110, 200, 300, 400, 500) selon la revendication 1 ou 2, comprenant en outre un dispositif électronique (115, 420) retenu à l'intérieur de la poche de délaminage, dans lequel le dispositif électronique est un parmi un dispositif d'identification par radiofréquence (RFID), un dispositif de système de localisation mondial (GPS), un dispositif de test, un dispositif de calibrage ou un dispositif de code d'accès.

4. Article de vêtement de protection (110, 200, 300, 400, 500) selon la revendication 3, dans lequel le dispositif électronique (115, 420) est scellé à l'intérieur de la poche de délaminage.

5. Article de vêtement de protection (110, 200, 300, 400) selon l'une quelconque des revendications 1 à 4, dans lequel le vêtement de protection (110, 200, 300, 400) est un gant électriquement isolant.

6. Article de vêtement de protection (110, 200, 300, 400, 500) selon l'une quelconque des revendications 1 à 4, dans lequel l'article de vêtement électriquement isolé est une botte électriquement isolée (500).

7. Article de vêtement de protection selon la revendication 2, dans lequel la pastille comprend une poche intérieure.

8. Article de vêtement de protection selon la revendication 2, dans lequel la deuxième surface extérieure de la pastille comprend un parmi un revêtement de fluoropolymère, de l'éthylène propylène fluoré et du perfluoroalkoxy.

9. Procédé de fabrication d'un article de vêtement de protection, comprenant les étapes suivantes:
immerger une forme dans un bain de caoutchouc liquide afin de créer une couche de caoutchouc intérieure (305) du vêtement de protection sur la forme;
sortir la forme du bain de caoutchouc liquide;
faire durcir la couche de caoutchouc intérieure (305); et
coller une pastille (605) à la couche de caoutchouc intérieure (305), dans lequel une face de la pastille à l'écart de la couche de caoutchouc intérieure (305) comprend un matériau auquel le matériau d'immersion dans un bain de caoutchouc n'adhère pas.

10. Procédé selon la revendication 9, comprenant en outre l'immersion de la couche de caoutchouc intérieure (305) dans le bain afin de créer une couche de caoutchouc extérieure (310) du vêtement de protection au-dessus de la couche de caoutchouc intérieure (305), dans lequel la couche de caoutchouc extérieure (310) est stratifiée sur la couche de caoutchouc intérieure (305), excepté à l'endroit où la couche de caoutchouc extérieure (310) est en contact avec la face non adhérente de la pastille, formant de ce fait une poche de délaminage (315) à l'intérieur de l'article de vêtement de protection.

11. Procédé selon la revendication 10, comprenant en outre l'installation d'un dispositif électronique (420) dans la poche de délaminage (315).

12. Procédé selon la revendication 10, comprenant en outre la coupe soit de la couche de caoutchouc intérieure, soit de la couche de caoutchouc extérieure pour ouvrir un accès à la poche de délaminage (315).

13. Procédé selon la revendication 9, dans lequel la couche de caoutchouc intérieure (305) est stratifiée sur une ou plusieurs couches de caoutchouc créées précédemment.

14. Procédé selon la revendication 10, dans lequel des couches de caoutchouc supplémentaires sont créées sur la couche de caoutchouc extérieure (310) en utilisant une série de cycles d'immersion et de durcissement.

15. Procédé selon la revendication 9, dans lequel le vêtement de protection est soit un gant de protection, soit des bottes de protection.
